# EUROPEAN PATENT APPLICATION

(11) **EP 4 442 113 A1**
(43) Date of publication of application: **09.10.2024**
(21) Application number: 23166293.3
(22) Date of filing: 03.04.2023
(51) Int. Cl.: A01K 1/00

(54) **VENTILATING ANIMAL STALL ASSEMBLY**

(71) Applicant: Earls, Gary, Co. Galway H53 VK10 (IE)
(72) Inventor: Earls, Gary, Co. Galway H53 VK10 (IE)
(74) Representative: FRKelly

(57) **Abstract**

A ventilating animal stall assembly (100), comprising a pair of opposed side barriers (203, 204) defining the sides of a cuboid area to accommodate a bovine animal, an opening between the opposed side barriers at one end of said cuboid area, the opening being sized to admit a bovine animal into said cuboid area, and a series of air outlet (304) provided in at least one of the side barriers (203, 204) configured to allow air to be blown there through. An air blower unit (208) supplies air to the side barriers (203, 204).

## Description

### Technical Field

This invention relates to ventilating stalls or cubicles for animals.

### Background Art

Housing conditions can have a significant impact on farm animal productivity, health and welfare. It can affect yields and farm profitability, which will also have a negative effect on the farm carbon footprint. Inadequate ventilation is a significant risk factor for dairy cows, contributing to a range of conditions such as pneumonia, mastitis and digital dermatitis.

Milking cows produce a lot of heat that has to be dissipated. This is done by evaporating moisture from their lungs when breathing out and as sweat through their skin (above 20 degrees). These actions increase the humidity of the surrounding air. However as air humidity increases, the effectiveness of cooling is reduced. Therefore this air must be removed and replaced with clean fresh air. Removing this stale air also reduces the risk of disease spread through the shed or barn - in a poorly ventilated environment, pathogens can survive for relatively long periods because of the more humid conditions. This damp air also causes the humidity of walls and floors to increase. This can lead to increased cases of digital dermatitis and mastitis.

While cows are quite cold tolerant, they are heat stressed at a temperature that most humans find comfortable; their thermoneutral zone is in the range of 4 to 21°C).

There are number of known systems for ventilating an animal barn such natural, cross, tunnel, hybrid, or positive pressure delivery systems to ventilate the barn. Whichever system is chosen, it should adhere to the following design criteria:

### 1. Provide target air speed in the cow's resting area microenvironment.

There is a need to provide fast moving air in the resting area in the summer and a gentle breeze in the winter. This may be achieved passively through inlet location and baffle placement or actively through the use of fans and positive pressure tube delivery systems.

### 2. Exhaust the heat, moisture, dust, and noxious gases from the barn at an adequate rate yearround.

Ventilation is the provision of fresh air to the building space, which displaces contaminated, warm, humid air. If this air is not effectively exhausted, then the cattle will be at risk for heat stress (summer/hot climate) and poor respiratory health (winter/cold climate).

### 3. Ensure that the system works well across all seasons.

Too often, the design of the ventilation system is effective for one season (most commonly the summer), but fails in the winter when the air exchange rate is reduced. It is important to design a system from the start that can function equally well at low and high ventilation rates.

With regard to the aforementioned cow resting area microenvironment, farm animals are frequently accommodated in barns using stalls (also referred to as cubicles or pens; the term "stalls" will be used herein). One common design of a stall has a common head barrier or wall with parallel dividers projecting out to define individual spaces for animals between a pair of adjacent dividers.

Cows accumulate heat rapidly while lying down (about 0.5 °C per hour of rest) and dissipate heat when they stand (about 0.25 °C per hour). If adequate cooling and ventilation is not provided while animals are lying down in stall they will spend more time standing and will not be able to rest for sufficient amount of time.

Most known ventilation systems ignore the fact that air is not distributed evenly within the barn. Cows spend a significant portion of time lying in a stall. Effective ventilation design does now account for the different microenvironments of the stalls within the barn. While some systems employ fans or baffles to impact air movement in the resting space there is a need for improved systems.

A common practice for free stall barns or sheds is adding a water soaker system as well as a ventilation system. There are two types of water soakers: high-pressure misters and low-pressure sprinkler systems. The difference between these two is either a misting or soaking outcome based on the water droplet size.

A high-pressure mister will lower the temperature around the cows by adding fine droplets of mist into the air, but it will increase the relative humidity of the barn. This method is recommended for drier climates.

In contrast, low-pressure sprinklers use water droplets to directly wet the cow. As the water is evaporating off of the cow, this will cause the cow's body temperature to cool. With an added benefit of pulling heat away from the cow's skin directly. This outcome is intensified by a direct breeze from a ventilation system in the free stall.

EP1389420 describes barn ventilation, by generating a pressure difference on a ventilation ceiling, with supply air openings distributed over at least part of the ventilation ceiling. Ventilation with such ventilation ceiling installations should enable ventilation with significantly different air performance and in any case not cause a draft.

US 2002/0124810 describes a system for liquid application between the hairs or on the skin, or by a combination of both, of the animal, whereupon air is blown over the liquid. In this manner the evaporation of the liquid is optimally utilized, so that an optimal cooling of the animal is obtained. According to a further feature, improved cooling is obtained if the liquid is atomized to a fine spray. In another embodiment the liquid is rubbed between the hairs or on the skin, or a combination of both, of the animal.

US 2003/205205 describes a ventilation system for an animal stall, the system comprising a ventilation layer comprising a plurality of passageways configured to carry a flow of air, a pump coupled to at least one of the passageways, an animal bedding layer above the ventilation layer, the animal bedding layer comprising animal bedding materials, and a separation layer between the ventilation layer and the animal bedding layer, the separation layer comprising a substantially planar layer having a plurality of openings there through, the openings being smaller than the animal bedding materials but large enough for air to pass through.

### Summary of the Invention

In a first independent aspect of the present teachings, there is provided a ventilating animal stall assembly comprising a pair of opposed side barriers defining the sides of a cuboid area to accommodate a bovine animal, an opening between the opposed side barriers at one end of said cuboid area, the opening being sized to admit a bovine animal into said cuboid area, and an air outlet provided in at least one of the side barriers configured to allow air to be blown there through.

The side barriers comprise top and bottom pipes. Optionally, at least one of the top and bottom hollow pipes has a first series of air outlets therein. The at least one of the top and bottom hollow pipes may have a second series of air outlets therein.

The ventilating animal stall assembly may further comprise a neck rail pipe running perpendicular to the pair of opposed side barriers at an opposite end to the opening.

Preferably, the neck rail pipe includes at least one air outlet configured to allow air to be blown there through. Optionally, the at least one air outlet is orientated so that air is blown above the cuboid area.

The ventilating animal stall assembly may further comprise brackets connecting the neck rail to the pair of opposed side barriers.

The ventilating animal stall assembly may further comprise a neck rail air supply connector configured to connect the neck rail to a side barrier, the neck rail air supply connector may be further configured to allow air to flow there through and into the neck rail.

Preferably, the neck rail air supply connector includes an inlet and two outlets, each of the two outlets connected to a different section of the neck rail.

The neck rail air supply connector is configured to divide air received through the inlet and provide it evenly to the two outlets.

The ventilating animal stall assembly may further comprise a brisket pipe running perpendicular to the pair of opposed side barriers at an opposite end to the opening.

Optionally, the brisket pipe includes at least one aperture configured to allow air to be blown there through.

Preferably, the brisket pipe runs along the base of the cuboid area.

The ventilating animal stall assembly may further comprising an air blower unit for supplying air to at least one of the side barriers. At least one barrier air line is preferably provided connecting the air blower unit and at least one of the side barriers.

Optionally, the air blower unit is further configured to provide air to the neck rail. At least one neck rail air supply line connecting the air blower unit and the neck rail may be provided.

In a further, independent aspect of the invention, there is provided a ventilating animal stall assembly, comprising a pair of opposed side barriers defining the sides of a cuboid area to accommodate a bovine animal, an opening between the opposed side barriers at one end of said cuboid area, the opening being sized to admit a bovine animal into said cuboid area, a neck rail connected to the opposed side barriers at an opposite end to the opening, and an air outlet provided in neck rail configured to allow air to be blown there through.

Preferably, the ventilating animal stall assembly further comprises brackets connecting the neck rail to the pair of opposed side barriers.

The ventilating animal stall assembly may further comprise an air supply bracket connecting the neck rail to a side barrier, the air supply bracket configured to allow air to flow there through and into the neck rail.

Preferably, the air supply bracket includes an inlet and two outlets, each of the two outlets connected to a different section of the neck rail.

The air supply bracket may be configured to divide air received through the inlet and provide it evenly to the two outlets.

The ventilating animal stall assembly may comprise an air blower unit configured to provide air to the neck rail. At least one neck rail air supply line may be provided connecting the air blower unit and the neck rail.

In a further, independent aspect of the invention, there is provided a ventilating animal stall assembly, comprising a pair of opposed side barriers defining the sides of a cuboid area to accommodate a bovine animal, an opening between the opposed side barriers at one end of said cuboid area, the opening being sized to admit a bovine animal into said cuboid area, a brisket pipe provided at a base of said cuboid area at an opposite end to the opening, and an air outlet provided in the brisket pipe configured to allow air to be blown there through.

The brisket may pipe run perpendicular to the opposed side barriers.

Preferably the side barriers comprise top and bottom hollow pipes and the brisket pipe runs underneath the bottom pipe and perpendicular to the bottom pipe.

The ventilating animal stall assembly may comprise an air blower unit configured to supply air to the brisket pipe which is blown out through the air outlet.

Preferably the brisket pipe is rotatably clamped to a base of the animal stall assembly.

### Brief Description of the Drawings

The invention will be further illustrated by the following description of embodiments thereof, given by way of example only with reference to the accompanying drawings, in which:
Fig. 1 is a perspective view of a layout of a barn containing a row of stalls;
Fig. 2 is a detailed view of a portion of Fig. 1;
Fig. 3 is a perspective view of a ventilating animal stall assembly;
Fig. 4 is a front and side elevation of the ventilating animal stall assembly of Fig. 3;
Fig. 5 is a perspective view of an alternative mounting for upper and lower barrier pipes of the ventilating animal stall assembly;
Fig. 6 is a perspective view of a further configuration for a ventilating animal stall assembly;
Fig. 7 is a front and side elevation of the ventilating animal stall assembly of Fig. 6;
Fig. 8 provides perspective views of a neck rail air supply connector; and
Fig. 9A and Fig. 9B provide further views of the neck rail air supply connector.

### Detailed Description

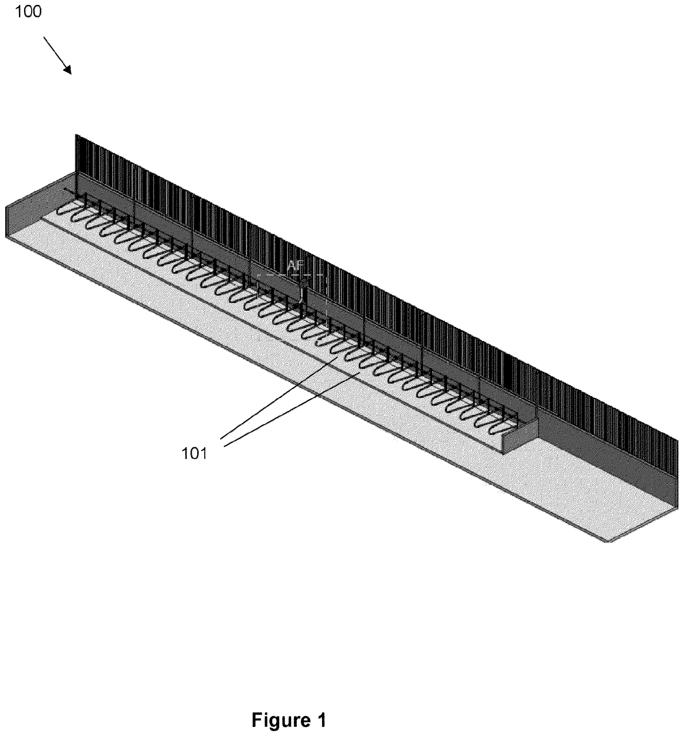

In Fig. 1 there is indicated, generally at 100, an animal barn layout containing an animal stall assembly with a plurality of animal stalls 101 arranged in a row.

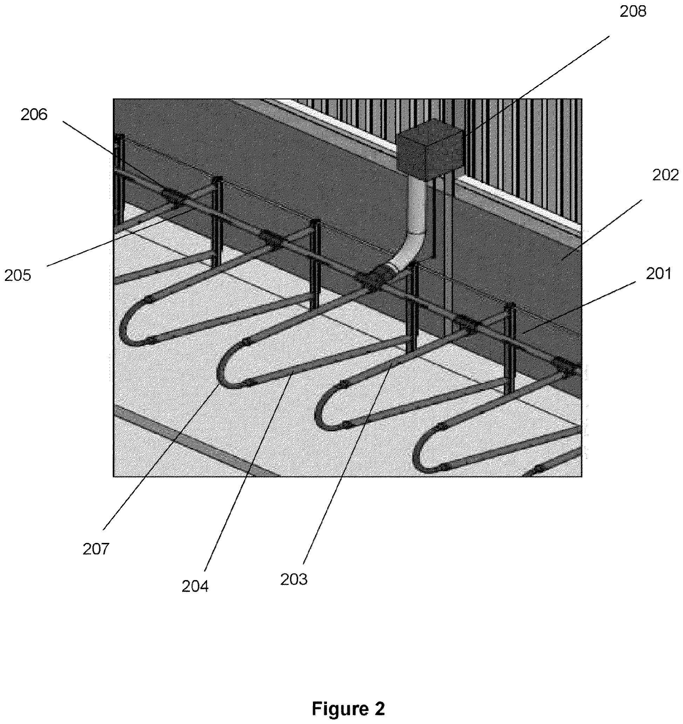

Referring additionally to Fig. 2, a detail of the Fig. 1 layout is shown (as indicated by AF in Fig. 1), including a series of stall posts 201 mounted along a wall 202 of the barn. It should be appreciated that the stall posts may also be positioned along a centre line of the barn or some other location. Each stall posts 201 may be provided with an upper mounting post (not visible) and a lower mounting post (not visible). Each stall post is used to mount a respective side barrier. Specifically, the upper mounting post is used to mount an upper barrier pipe 203, of a sider barrier, which extends horizontally outward from the stall post 201. The lower mounting post is used to mount a lower barrier pipe 204, of a side barrier, which extends outward from stall post 201 in the same vertical plane as the upper barrier 203. The lower barrier may be inclined upwardly at an angle of 15 degrees.

A lengthwise hollow head-end pipe, known as a neck rail 205, is connected to the top of the upper barrier pipes 203 by a series of neck rail brackets 206, such that the neck rail 205 runs along the head-end of the row stalls (Fig. 1). (As used herein the term "head-end" refers to the part of the stall nearest to the wall 202 (or centre line if two rows of stalls are provided head-end to headend), as opposed to the "open end" into which the animal enters a stall.) The brackets 206 allow the neck rail 205 to run there through.

Connecting the upper barrier pipe 203 and lower barrier pipe 204 of each side barrier is a generally C-shaped barrier component 207, with the barrier assembly comprising a connected pair of pipes 203, 204 and the component 207. It can be seen that the ends of the "C" shape are mated with the pipes 203, 204 at the open end of the stalls. The barrier pipes 203, 204 are hollow along their length. An end section of each pipe 203, 204 is configured to receive an end section of the component 207. The barrier component 207 comprises a curved, elongated body member made of vulcanised, moulded rubber (though other flexible elastomers can be used).

As will be explained in more detail hereinafter, the hollow configuration of the upper and lower pipes 203, 204 as well as the hollow neck rail 205 allows these components to be used to ventilate the stall and barn. That is, air is piped through these components from an air blower unit 208. This is described in greater detail hereinafter.

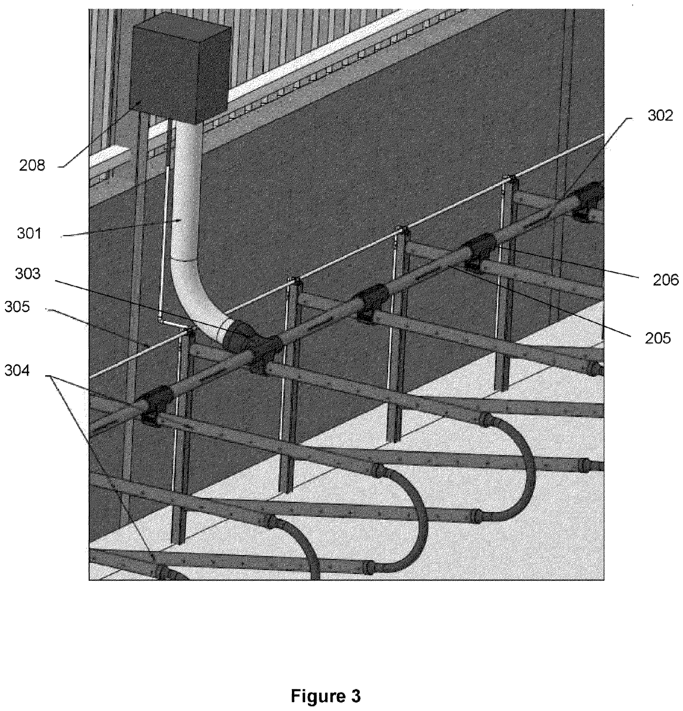

Turning to Fig. 3, a more detailed view of a ventilating animal stall assembly in accordance with the present teachings is provided. Air is supplied from the air blower unit 208 into the neck rail 205 using a neck rail air supply line 301. It can be seen that the neck rail is provided with air outlets 302. Each air outlet is positioned generally half way between two opposed side barriers, specifically halfway between two opposed upper barrier pipes 203. Each neck rail air outlet 302 is configured to be above an animal lying in a rectangular area (or cuboid area) defined by two opposed side barriers of the stall. While the neck rail air outlets 302 are shown as elongated outlets the present teachings are not limited to this configuration and a circular outlet or series of circular outlets may be provided in the neck rail.

The system is configured so that air is blown from the air blower unit 208 through the air supply line 301 and through a neck rail air supply connector 303 to neck rail air outlet 302. The air supply connector 303 is similar to the aforementioned neck rail brackets 206 in that it connects the neck rail 205 to the upper barrier pipe 203. However, as will be explained in more detail later the air supply connector 303 is provided with an air inlet configured to connect with the neck rail air supply line 301 and allow air to pass into the neck rail 205. The air supply connector 303 connects two lengths or sections of the neck rail 205 and provides a T-shaped connection such that air is provided to each of the two connected sections of the neck rail.

It can also be seen from Fig. 3 that the side barriers are provide with barrier air outlets 304. Specifically, the upper and lower barrier pipes 203, 204 are provided with air outlets 304. A plurality of outlets positioned along the length of each barrier pipe 203, 204 are provided in the exemplary embodiment. However, a single elongated outlet may be provided in each barrier pipe 203, 204. In addition, an air outlet or outlets of any shape may be provided in only one of the upper and lower barrier pipes 203, 204.

Air is blown into the barrier pipes 203, 204 by the air blower unit 208 via barrier air lines 305. The barrier air lines run through the stall posts 201 to provide air into the barrier pipes, 203, 204. In the exemplary embodiment these barrier air lines 305 are distinct from the air supply line 301 feeding air to the neck rail 205. The barrier air lines 305 are also of reduced capacity when compared to the neck rail air supply line 301. That is the diameter of the barrier air lines 305 is much smaller than the diameter of the neck rail air supply line 301. However, it will be appreciated that this does not have to be the case and alternative diameters for the barrier and neck rail air supply lines may also be used.

While the aforementioned exemplary system or assembly of Fig. 3 is shown with air being supplied to both the neck rail 205 and side barriers (upper and lower barrier pipes 203, 204) the present teachings are not limited to this configuration. The assembly may be configured such that the air blower unit 208 only provides air to the neck rail air outlets 302 while barrier air lines 305 as well as barrier air outlets 304 are not provided. Alternatively, barrier air lines 305 as well as barrier air outlets 304 may be provided while the neck rail air supply line 301 is not provided and air is not delivered to the neck rail.

It should also be appreciated by those skilled in the art that the previously C-shaped Barrier component 207 does not have to be used. Any number of suitable components could be used to connect upper and lower pipes 203, 204 of the side barrier. Alternatively, the upper and lower pipes could be configured as a single contentious U-shaped pipe without a separate C-shaped barrier component.

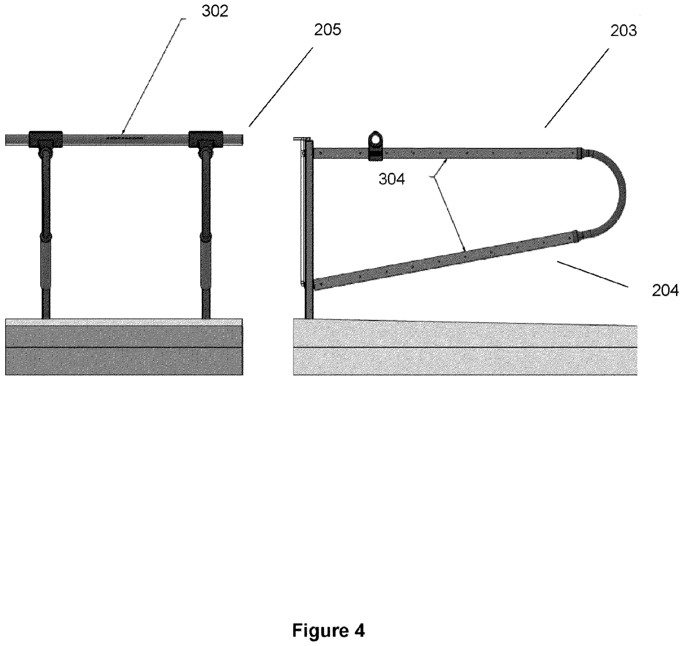

Turning to Fig. 4 this provides a front and side elevation of the barrier components and neck rail of Fig. 3. In particular, it can be seen that neck rail air outlets 302 can be angled upwards away from the area in which an animal would be lying to influence air circulation within the barn. That is, air can be blown upwards from the previously mentioned rectangular area (or cuboid area) defined by two opposed side barriers of the stall. Furthermore, the neck rail pipe 201 can be positioned at whichever angle is required prior to fixing in place in order to position the neck rail air outlets 302 at the optimal position for the barn in question. As previously mentioned, in the exemplary embodiment air flow volume from the neck rail air outlets 302 will be higher than air flow volume from barrier air outlets 304 provided in the upper and lower barrier pipes 203, 204.

Using the assembly in accordance with Fig. 4, air circulates beside each animal using a slow air flow rate through upper and lower barrier pipes. The assembly also circulates air above animals using the neck rail pipe and thus creates air turbulence with circulating air inside the barn. Air temperature beside each animal and in the air space above the animals can be regulated

Air outlets 304 may be provided on only one side or both side of the upper and lower cubicle pipes 203, 204.

The system may be further configured such that the temperature of the air provided to the neck rail 201 and barrier pipes 203, 204 can be regulated. The temperature of the air provided by the air blower unit to the upper and lower barrier pipes can be regulated independently to the air provided to the neck rail air outlets.

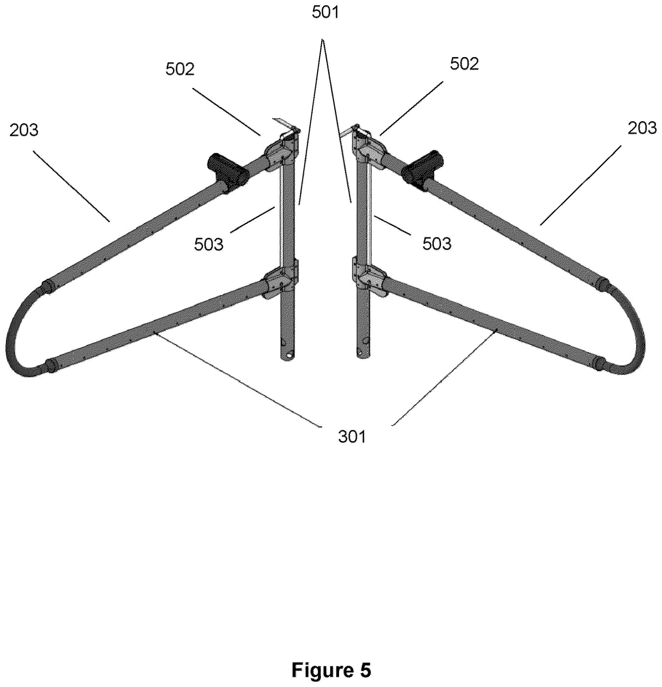

Turning to Fig. 5 this shows how the ventilating animal stall assembly in accordance with the present teachings can work with an alternative configuration for mounting the upper and lower barrier pipes 203, 204. In this configuration, circular stall posts 501 are provided as well as clamps 502 to attach the upper and lower barrier pipes 203, 204 to the stall posts 501. The barrier air supply lines 503 are suitably configured to provide air from the air blower unit 208 through the clamps 502 to each of the upper and lower barrier pipes 203, 204.

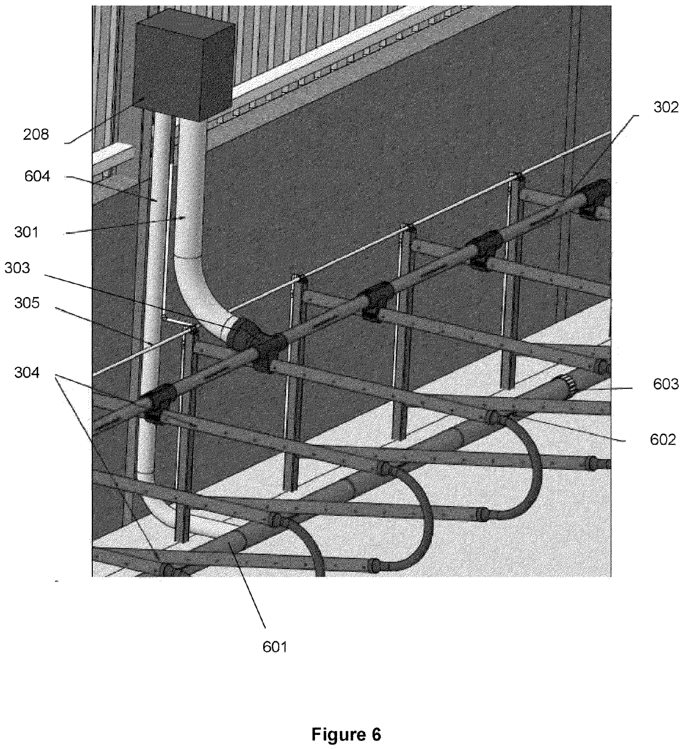

Fig. 6 shows another embodiment of the ventilating animal stall assembly in accordance with the present teachings. The configuration shown in Fig. 6 is quite similar to that shown in Fig. 3 except for the addition of a brisket board (or brisket pipe) 601. As is known in the art, a brisket board or pipe is used to correctly position a cow in the stall and prevent the cow from lying too far forward. This means that if the cow defecates while lying down or after standing up, the dung will not end up on the base of the stall, but on the passageway. In addition, when a cow lies too far forward in the stall, it can sometimes be difficult for the cow to stand up.

The brisket board 601 is provided on a base of the stall at the headend. Specifically, the opposed side barriers define a cuboid area with an open end and a head end at an opposite end to the open end. The cow enters and exits the stall via the open end. The neck rail 205 is provided at the head end attached to the upper barrier pipes 203. The brisket board is provided at the base on the cuboid area at the head end. In the exemplary embodiment the brisket board 601 runs under the lower barrier pipes 204 and perpendicular to the lower barrier pipes 204. Both the neck rail 205 and the brisket board 601 are provided at the head-end of the stall and run parallel to each other.

The brisket board 601 in accordance with the present teachings is provided with air outlets 602 therein positioned periodically along the length thereof. The brisket board 601 can be rotated during installation so that the air outlets 602 are orientated for the desired air flow direction. The brisket board 601 is then held in place using clamps 603. It will be appreciated that any number of techniques known to the person skilled in the art can be used to fix the brisket board 601 to the base of the stall. A brisket board air supply line 604 is used to provide air from the air blower unit 208 to the brisket board 601. The brisket board 601 is configured as a hollow pipe with the air outlets 602 therein.

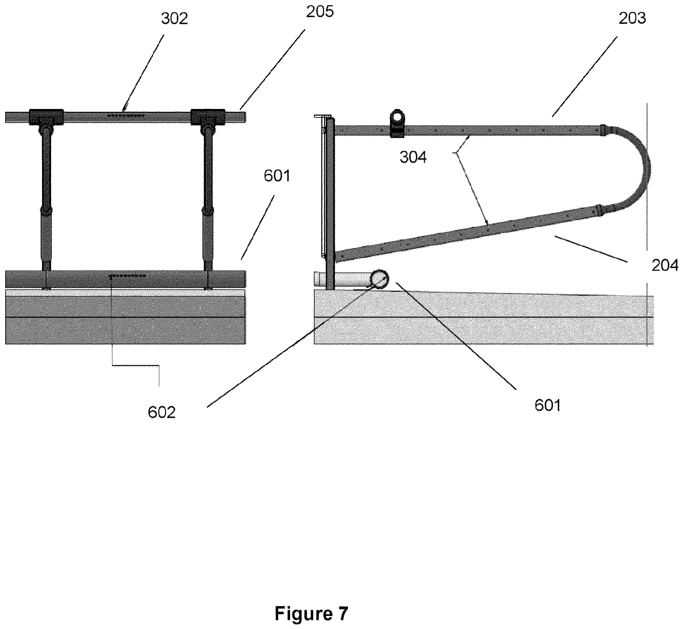

With reference to Fig. 7, it can been seen in more detail that the brisket board air outlets 602 can be angled upwards away from the area in which an animal would be lying to influence air circulation within the barn. Air flow from these outlets 602 can be regulated to whatever flow rate is required. The temperature of this air can also be regulated.

It should be appreciated that the ventilating animal stall assembly in accordance with Fig. 6 and Fig. 7 does not have to include the barrier air outlets 304 as well the corresponding barrier air lines 305. Additionally, the neck rail air outlets 302 as well as the corresponding neck rail air supply line 301 may not be provided. The ventilating animal stall assembly in accordance with the present teachings may be configured to provide with one or more of the following (i) ventilation via the barrier air outlets, (ii) ventilation via the neck rail air outlets, and (iii) ventilation via the brisket board air outlets.

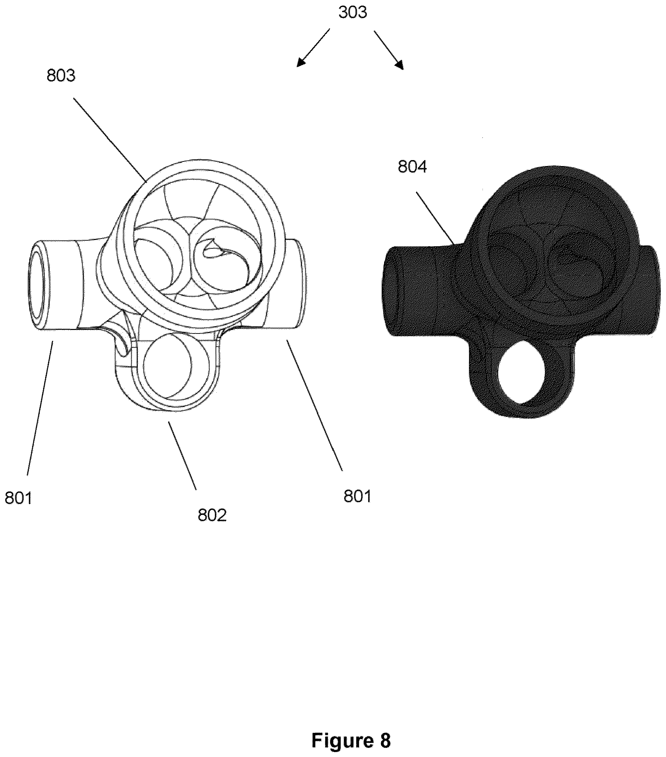

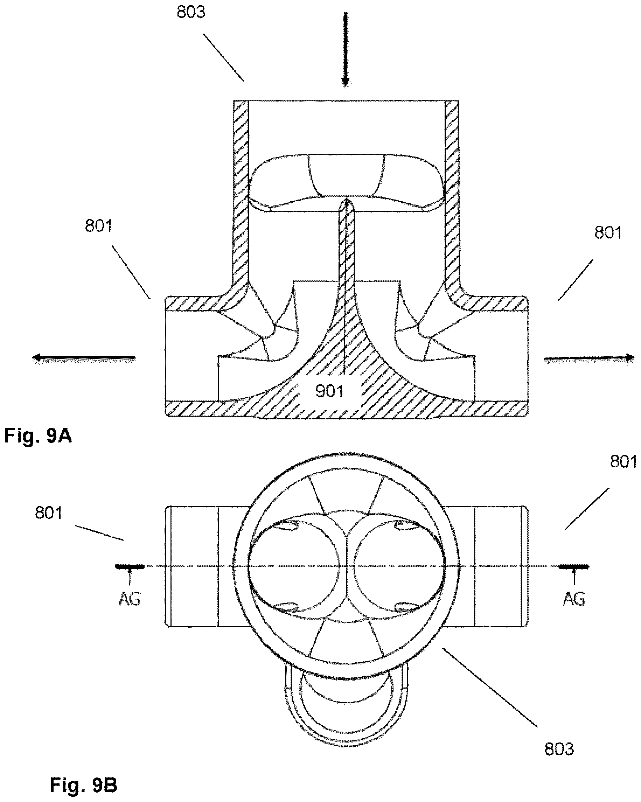

With reference to Fig. 8, this shows the aforementioned neck rail air supply connector 303 in more detail. The neck rail air supply connector 303 includes two pipe collars 801, each configured to receive a section of the neck rail. The pipe collars 801 also function as air outlets. Perpendicular to the pipe collars 801 is a barrier pipe engaging member 802. This engaging member 802 is configured as a pipe collar. In use, the upper barrier pipe 203 is inserted in the barrier pipe engaging member 802 - this can be seen in figures 3 and 6. Unlike the known neck rail brackets 206 the neck rail air supply connector 303 includes an air inlet 803. As explained in more detail with respect to Figs. 9A and 9B, the neck rail air supply connector 303 is configured such that air entering the air inlet 803 is divided evenly and directed to each of the pipe collars 801. The air inlet 803 connected to the pipe collars 801 via a central T-section 804. Air is provided to the air inlet 803 from the air blower unit 208. Specifically, the neck rail air supply line 301 connects to the air inlet 803.

With reference to Figs. 9A and 9B these provide further views of the neck rail air supply connector 303 in accordance with the present teachings. In particular, Fig. 9A is a cross section of Fig. 9B along axis AG. The arrows of Fig. 9A show the direction of air flow when the neck rail air supply connector 303 is in use and air is being blown in through the air inlet 803. The central T-section is shaped internally with a divider wall 901. The internal configuration of the central T-shaped section provides a junction which splits the air from the air inlet and provides the air evenly to each of the pipe collars 801. When a section of neck rail 201 is connected to each pipe collar then air enters the neck rail 201 and exits via a neck rail air outlet 302.

The previously described neck rail brackets 206 are hollow allowing air to pass from one section neck rail pipe into the next when connecting sections of the neck rail. The two ends of the neck rail pipe are sealed off with a blanked rubber coupling that is screwed onto the end wall of the stall/cubicle bank (row of stalls/cubicles).

It can be seen from at least Fig. 9B that the circumference of the air inlet 803 is much larger than the pipe collars 801, which functioning as air outlets. However, the person skilled in the art will appreciate that alternative diameters can be chosen for these components to suit the desired air flow.

The invention is not limited to the embodiments described which can be modified without departing from the scope of the claimed invention.

## Claims

1. A ventilating animal stall assembly, comprising:
a pair of opposed side barriers defining the sides of a cuboid area to accommodate a bovine animal;
an opening between the opposed side barriers at one end of said cuboid area, the opening being sized to admit a bovine animal into said cuboid area; and
an air outlet provided in at least one of the side barriers configured to allow air to be blown there through.

2. The ventilating animal stall assembly of claim 1, wherein the side barriers comprise top and bottom pipes.

3. The ventilating animal stall assembly of claim 2, wherein at least one of the top and bottom hollow pipes has a first series of air outlets therein.

4. The ventilating animal stall assembly of claim 3, wherein the at least one of the top and bottom hollow pipes has a second series of air outlets therein.

5. The ventilating animal stall assembly of any one of claims 1 to 4, further comprising a neck rail running perpendicular to the pair of opposed side barriers at an opposite end to the opening.

6. The ventilating animal stall assembly of claim 5, wherein the neck rail includes at least one air outlet configured to allow air to be blown there through.

7. The ventilating animal stall assembly of claim 6, wherein the at least one air outlet is orientated so that air from the air outlet is blown above the cuboid area.

8. The ventilating animal stall assembly of any one of claims 5 to 7 further comprising a neck rail air supply connector configured to connect the neck rail to a side barrier, the neck rail air supply connector further configured to allow air to flow there through and into the neck rail.

9. The ventilating animal stall assembly of claim 8 wherein the neck rail air supply connector includes an inlet and two outlets, each of the two outlets connected to a different section of the neck rail.

10. The ventilating animal stall assembly of any one of claims 1 to 9, further comprising a brisket pipe running perpendicular to the pair of opposed side barriers at an opposite end to the opening.

11. The ventilating animal stall assembly of claim 10 wherein the brisket pipe includes at least one aperture configured to allow air to be blown there through.

12. The ventilating animal stall assembly of claim 12 or 13 wherein the brisket pipe runs along the base of the cuboid area.

13. The ventilating animal stall assembly of any one of claims 1 to 12 further comprising an air blower unit for supplying air to at least one of the side barriers.

14. The ventilating animal stall assembly of claim 13 when dependent on any one of claims 5 to 9 wherein the air blower unit is further configured to supply air to the neck rail.

15. The ventilating animal stall assembly of claim 13 when dependent on any one of claims 10 to 12 wherein the air blower unit is further configured to supply air to the brisket pipe.
